# EUROPÄISCHE PATENTANMELDUNG

(11) **EP 4 606 737 A1**
(43) Veröffentlichungstag der Anmeldung: **27.08.2025**
(21) Anmeldenummer: 24158892.0
(22) Anmeldetag: 21.02.2024
(51) Int. Cl.: B65G 1/137, B65G 1/06

(54) **KOMMISSIONIERVORRICHTUNG UND VERFAHREN ZUM KOMMISSIONIEREN VON WAREN**

(71) Anmelder: KNAPP Systemintegration GmbH, 8700 Leoben (AT)
(72) Erfinder: Maurer, Stephan, 8020 Graz (AT); Riedner, Franz-Alois, 8741 Weißkirchen (AT)
(74) Vertreter: Wirnsberger & Lerchbaum Patentanwälte OG

(57) **Zusammenfassung**

Die Erfindung betrifft eine Kommissioniervorrichtung (1), aufweisend einen Kommissionierplatz (2) sowie eine dem Kommissionierplatz (2) vorgelagerte Zuführung (3), um dem Kommissionierplatz (2) einen Ladungsträger (4) zuzuführen, auf welchem Ladungsträger (4) anschließend Waren kommissioniert werden können, wobei mit der Zuführung (3) eine erste Ladungsträgerbereitstellungseinrichtung (5) verbunden ist, von welcher Ladungsträger (4) eines ersten Typs der Zuführung (3) zuführbar sind. Erfindungsgemäß ist vorgesehen, dass mit der Zuführung (3) auch eine zweite Ladungsträgerbereitstellungseinrichtung (6) verbunden ist, um dem Kommissionierplatz (2) über die Zuführung (3) alternativ zum Ladungsträger (4) des ersten Typs auch Ladungsträger (4) eines zweiten Typs zuführen zu können.

## Beschreibung

Die Erfindung betrifft eine Kommissioniervorrichtung, aufweisend einen Kommissionierplatz sowie eine dem Kommissionierplatz vorgelagerte Zuführung, um dem Kommissionierplatz einen Ladungsträger zuzuführen, auf welchem Ladungsträger anschließend Waren kommissioniert werden können, wobei mit der Zuführung eine erste Ladungsträgerbereitstellungseinrichtung verbunden ist, von welcher Ladungsträger eines ersten Typs der Zuführung zuführbar sind.

Weiter betrifft die Erfindung ein Verfahren zum Kommissionieren von Waren auf einem Ladungsträger an einem Kommissionierplatz.

Aus dem Stand der Technik sind Kommissioniervorrichtungen der eingangs genannten Art bekannt geworden. Es hat sich jedoch gezeigt, dass derartige Kommissioniervorrichtungen häufig Kundenanforderungen nicht genügen. Insbesondere hat sich gezeigt, dass in vielen Fällen unterschiedliche Ladungsträgertypen eingesetzt werden und insbesondere ein Wechsel eines Ladungsträgertyps von einem Kommissionierauftrag zu einem nächsten Kommissionierauftrag häufig zu Problemen führt.

Hier setzt die Erfindung an. Aufgabe der Erfindung ist es, eine Kommissioniervorrichtung der eingangs genannten Art anzugeben, welche besonders gut zur Ausführung von Kommissionieraufträgen mit wechselnden Ladungsträgern geeignet ist.

Weiter soll ein derartiges Verfahren angegeben werden.

Die erste Aufgabe wird erfindungsgemäß durch eine Kommissioniervorrichtung der eingangs genannten Art gelöst, bei welcher mit der Zuführung noch eine zweite Ladungsträgerbereitstellungseinrichtung verbunden ist, um den Kommissionierplatz über die Zuführung alternativ zum Ladungsträger des ersten Typs auch Ladungsträger eines zweiten Typs zuführen zu können.

Üblicherweise ist die erste Ladungsträgerbereitstellungseinrichtung zur sortenreinen Bereitstellung von Ladungsträgern eines ersten Typs, beispielsweise Rollcontainern, und ist die zweite Ladungsträgerbereitstellungseinrichtung zur sortenreinen Bereitstellung von Ladungsträgern eines zweiten Typs, beispielsweise Paletten, ausgebildet. Über die Zuführung können nun Ladungsträger unterschiedlicher Typen aufgenommen und dem Kommissionierplatz zugeführt werden, um auf diesen Ladungsträgern Waren zu kommissionieren. Bei entsprechenden Kommissioniervorrichtungen des Standes der Technik konnte ein Wechsel von einem Ladungsträger auf einen anderen Ladungsträger nur erfolgen, indem über die Zuführung Ladungsträger entsprechend einer Sequenz, welche der Sequenz der in den einzelnen Kommissionieraufträgen entsprechenden Ladungsträgern entspricht, zugeführt wurden. Folglich war eine Änderung dieser Sequenz nicht kurzfristig möglich, welche Sequenzänderung insbesondere bei Kommissionierfehlern, fehlerhaften oder fehlenden Waren oder dergleichen auftreten kann. Dieser Nachteil wird mit einer erfindungsgemäßen Kommissioniervorrichtung somit vermieden, indem über die Zuführung jederzeit Ladungsträger unterschiedlicher Typen zugeführt werden können, sodass auf erforderliche Sequenzwechsel rasch eingegangen werden kann.

Wenngleich hier von einer ersten Ladungsträgerbereitstellungseinrichtung bzw. Ladungsträgern eines ersten Typs und einer zweiten Ladungsträgerbereitstellungseinrichtung bzw. Ladungsträgern eines zweiten Typs die Rede ist, versteht es sich, dass die Erfindung auch mit drei oder noch mehr unterschiedlichen Typen von Ladungsträgern umgesetzt werden kann. Beispielsweise kann die Erfindung für Europaletten, Rollcontainer, Halbpaletten und/oder Plastikpaletten eingesetzt werden. Entsprechend können zusätzlich zur zweiten Ladungsträgerbereitstellungseinrichtung auch eine oder mehrere weitere Ladungsträgerbereitstellungseinrichtungen vorgesehen sein.

Um besonders rasch auf wechselnde Ladungsträgertypanforderungen in Kommissionieraufträgen reagieren zu können, hat es sich bewährt, dass die Zuführung zwei Ladungsträgerplätze aufweist, wobei dem Kommissionierplatz von jedem Ladungsträgerplatz aus Ladungsträger zuführbar sind. Somit ergeben sich in der Zuführung Pufferspeicher für Ladungsträger der einzelnen Typen, aus welchen Pufferspeichern heraus Ladungsträger mit besonders kurzen Transportwegen zum Kommissionierplatz bewegt werden können, wodurch ein besonders rascher Wechsel von einem Ladungsträgertyp zu einem anderen Ladungsträgertyp möglich ist.

Insbesondere wenn die Vorrichtung für mehr als zwei Typen von Ladungsträgern eingesetzt wird, können natürlich auch weitere Ladungsträgerplätze vorgesehen sein, beispielsweise drei oder vier Ladungsträgerplätze.

Die Ladungsträgerplätze können relativ zueinander in unterschiedlichster Weise angeordnet sein, beispielsweise vertikal übereinander und/oder horizontal nebeneinander. Waren können zwischen den Ladungsträgerplatzen bzw. von einem oder jedem der Ladungsträgerplätze zum Kommissionierplatz auf unterschiedlichste Weisen transportiert werden, beispielsweise mit einem Querverfahrwagen oder einem Roboter mit einem Greifer bzw. einem Greifarm.

Die Zuführung kann unmittelbar dem Kommissionierplatz vorgelagert angeordnet sein. Es kann jedoch auch vorgesehen sein, dass zwischen der Zuführung und dem Kommissionierplatz ein Pufferplatz für zumindest einen, insbesondere für genau einen, Ladungsträger vorgesehen ist. Der Pufferplatz kann dann, wenn ein auf einen aktuellen Kommissionierauftrag folgender Kommissionierauftrag denselben Ladungsträger wie der aktuelle Kommissionierauftrag vorsieht, mit dem Ladungsträger des Typs befüllt werden, welcher dem aktuellen Kommissionierauftrag entspricht. Sollte es beispielsweise beim aktuellen Kommissionierauftrag zu einem Fehler kommen, kann dann auf den im Pufferplatz befindlichen Ladungsträger ausgewichen werden, zumal der Pufferplatz dem Kommissionierplatz üblicherweise unmittelbar vorgelagert ist bzw. an diesen angrenzt. Sollte es zu keinem Fehler kommen, ist für den folgenden Kommissionierauftrag bereits der korrekte Ladungsträger bereitgestellt, und zwar im Pufferplatz.

Bei einem Wechsel eines Ladungsträgertyps, also wenn ein auf einen aktuellen Kommissionierauftrag folgender Kommissionierauftrag einen anderen Ladungsträgertyp als der aktuelle Kommissionierauftrag aufweist, kann der Pufferplatz freigehalten werden. Somit kann abhängig davon, ob beim aktuellen Kommissionierauftrag ein Fehler auftritt und ein weiterer identer Ladungsträger wie beim aktuellen Kommissionierauftrag benötigt wird, oder der nächste Kommissionierauftrag mit unterschiedlichen Ladungsträgern plangemäß gestartet wird, der entsprechende Ladungsträger über die Zuführung und den Pufferplatz rasch bereitgestellt werden. Anders ausgedrückt bleibt der Pufferplatz üblicherweise nur dann frei, wenn ein auf einen aktuellen Kommissionierauftrag folgender Kommissionierauftrag einen Ladungsträger eines anderen Typs als der aktuelle Kommissionierauftrag aufweist.

Bevorzugt ist vorgesehen, dass die Ladungsträgerplätze vertikal übereinander angeordnet sind. Dies ermöglicht eine besonders platzsparende Bauweise, wobei gleichzeitig kurze Transportwege von den Lagerplätzen zum Kommissionierplatz bzw. einem vorgelagerten Pufferplatz erreicht werden.

Günstig ist es, wenn zumindest ein Ladungsträgerplatz mit Rollen ausgebildet ist, um ein einfaches Ein- und Auslagern von Ladungsträgern zu ermöglichen. Beispielsweise kann ein Ladungsträgerplatz mit Rollbahnen mit einer Neigung und einem Anschlag ausgebildet sein, sodass Ladungsträger über die entsprechende Ladungsträgerbereitstellungseinrichtung, insbesondere einem Kettenförderer, leicht an die Zuführung bzw. den Ladungsträgerplatz übergeben werden können und dort an einer definierten Position gehalten sind.

Die Zuführung unterschiedlicher Ladungsträgertypen kann in verschiedensten Weisen ausgebildet sein. Es hat sich jedoch zur Erreichung einer besonders kompakten Bauweise als günstig herausgestellt, wenn die Zuführung als vertikal verfahrbarer Lift ausgebildet ist. Der Lift bzw. ein vertikal verfahrbarer Schlitten kann dann die für die einzelnen Ladungsträgertypen erforderlichen Ladungsträgerplätze aufweisen, in welchen Ladungsträger der unterschiedlichen Typen gesondert zwischengelagert werden können. Je nachdem, welcher Ladungsträgertyp am Kommissionierplatz bzw. einem vorgelagerten Pufferplatz gerade benötigt wird, wird dann eine Vertikalposition des Lifts bzw. eines Hubschlittens gewählt, welche eine Entnahme des Ladungsträgers des jeweiligen Typs aus dem jeweiligen Ladungsträgerplatz auf den Kommissionierplatz bzw. den vorgelagerten Pufferplatz ermöglicht.

Besonders günstig ist es somit, wenn die Zuführung einen vertikal verfahrbaren Hubschlitten mit vertikal übereinander angeordneten Ladungsträgerplätzen für Ladungsträger der einzelnen Typen aufweist. Die Ladungsträgerbereitstellungseinrichtungen können auf jede aus dem Stand der Technik bekannte Weise ausgebildet sein. Insbesondere kann auch vorgesehen sein, dass eine oder beide Ladungsträgerbereitstellungseinrichtungen die Ladungsträger der einzelnen Typen bereitstellen, indem die Ladungsträger aus entsprechenden Ladungsträgerspeichern bzw. Lagern manuell oder maschinell zur Zuführung bewegt werden, insbesondere mit Hubstaplern. Besonders günstig ist es jedoch, wenn die erste Ladungsträgerbereitstellungseinrichtung und/oder die zweite Ladungsträgerbereitstellungseinrichtung als Rollenförderer oder Kettenförderer ausgebildet sind.

Günstig ist es, wenn die erste Ladungsträgerbereitstellungseinrichtung zur Bereitstellung von Rollcontainern eingerichtet ist. Es hat sich gezeigt, dass neben Paletten häufig Rollcontainer als Ladungsträger benutzt werden, insbesondere um Waren, die für Supermärkte und dergleichen bestimmt sind, zu kommissionieren und mittels der Rollcontainer an einem Zielort leicht zu Zielregalen transportieren zu können. Rollcontainer weisen in aller Regel einen Boden, mit dem Boden verbundene Rollen sowie gegebenenfalls zwei oder vier Seitenwände auf. Um zu verhindern, dass die Rollcontainer innerhalb der Kommissioniervorrichtung unkontrollierte Bewegungen ausführen, ist bevorzugt vorgesehen, dass die Rollcontainer von der ersten Ladungsträgerbereitstellungseinrichtung auf Adaptern bereitgestellt werden, welche Adapter Formschlusselemente, insbesondere Ausnehmungen, zur formschlüssigen Fixierung der Rollcontainer an den Adaptern aufweisen. Die Adapter sind üblicherweise ohne bodenseitige Rollen ausgebildet, sodass diese einfach und stabil transportiert werden können, beispielsweise über Kettenförderer, Rollenförderer oder Förderbänder. Bevorzugt sind die Adapter als Adapterplatten ausgebildet, welche beispielweise aus Holz hergestellt und bodenseitig flach ausgebildet sein können. Zur Fixierung der Rollcontainer an den Adaptern können die Formschlusselemente beispielsweise als Positionen und Größen der Rollcontainer entsprechende Ausnehmungen bzw. Ausfräsungen ausgebildet sein, in welche die Rollen der Rollcontainer leicht einrasten können. Gleichzeitig können die Rollcontainer in diesem Fall auch wieder leicht von den Adaptern entfernt bzw. heruntergehoben werden.

Die Adapter verbleiben üblicherweise innerhalb der Kommissioniervorrichtung und werden nicht mit dem Kommissionierauftrag versandt. Entsprechend ist es günstig, wenn eine Trenneinrichtung vorgesehen ist, mittels welcher die Adapter von den Rollcontainern trennbar sind. Üblicherweise ist diese Trenneinrichtung dem Kommissionierplatz nachgelagert vorgesehen, sodass die Rollcontainer auf den Adaptern bis in den Kommissionierplatz transportiert werden können, und zwar in stabiler Art und Weise, wonach eine Kommissionierung der Waren auf den Ladungsträgern am Kommissionierplatz erfolgt, wonach der den Ladungsträger und die auf diesen kommissionierten Waren umfassende Kommissionierauftrag vom Kommissionierplatz entfernt wird, üblicherweise zu einem Transportfahrzeug, mit welchem der Kommissionierauftrag zu einem Zielort transportiert wird. Die Trenneinrichtung trennt nun den Ladungsträger vom Adapter, bevor der Kommissionierauftrag in ein entsprechendes Transportfahrzeug bewegt wird, sodass der Adapter innerhalb der Kommissioniervorrichtung verbleibt und für spätere Kommissionieraufträge genutzt werden kann. Beispielsweise kann vorgesehen sein, dass der Ladungsträger samt den darauf kommissionierten Waren vom Kommissionierplatz aus abgesenkt wird, wobei insbesondere während eines Absenkens auch ein Einwickeln des Ladungsträgers samt den darauf kommissionierten Waren erfolgen kann, wobei bei einer solchen Absenkbewegung auch eine Trennung des Adapters vom Ladungsträger erfolgen kann.

Beispielsweise kann vorgesehen sein, dass die Trenneinrichtung eine Halteeinrichtung, mittels welcher der Rollcontainer unabhängig vom Adapter fixierbar ist, und eine Abfördereinrichtung, mittels welcher der Adapter unabhängig vom Rollcontainer abförderbar ist, aufweist. So kann vorgesehen sein, dass der Kommissionierauftrag samt dem Adapter durch einen bodenseitigen Hubtisch, welcher an den Adapter angreift, abgesenkt wird, wonach eine Halteeinrichtung den Rollcontainer unabhängig vom Adapter greift, während die als Hubtisch ausgebildete Abfördereinrichtung den Adapter weiter abfördert und wieder in die Kommissioniervorrichtung einspeist.

Besonders günstig ist es, wenn an die Abfördereinrichtung anschließend eine Rückfördereinrichtung vorgesehen ist, mit welcher Rückfördereinrichtung der Adapter wieder an die erste Ladungsträgerbereitstellungseinrichtung rückgefördert werden können.

Die weitere Aufgabe wird erfindungsgemäß durch ein Verfahren der eingangs genannten Art gelöst, bei welchem der Kommissionierplatz über eine Zuführung wahlweise Ladungsträger eines ersten Typs oder Ladungsträger eines zweiten Typs zugeführt werden, auf welchen die Waren anschließend kommissioniert werden. Bevorzugt wird das erfindungsgemäße Verfahren mit einer erfindungsgemäßen Kommissioniervorrichtung umgesetzt und ist eine erfindungsgemäße Kommissioniervorrichtung zur Durchführung eines erfindungsgemäßen Verfahrens geeignet.

Günstig ist es, wenn zwischen der Zuführung und dem Kommissionierplatz ein Pufferplatz für einen Ladungsträger vorgesehen ist. Dadurch kann ein besonders rascher Ladungsträgerwechsel gewährleistet werden, und zwar auch dann, wenn die Zuführung gerade zur Befüllung eines Ladungsträgerplatzes bewegt wird.

Günstig ist es, wenn der Pufferplatz mit dem Ladungsträger eines auf einen aktuellen Kommissionierauftrag folgenden Kommissionierauftrag befüllt wird, wenn dieser folgende Kommissionierauftrag denselben Ladungsträgertyp aufweist wie der aktuelle Kommissionierauftrag.

Beispielsweise kann ein aktueller Kommissionierauftrag als Ladungsträgertyp einen Rollcontainer vorsehen, während bei einem nachfolgenden Kommissionierauftrag als Ladungsträgertyp eine Palette vorgesehen ist. In diesem Fall würde der Pufferplatz nicht schon bei Erledigung des ersten Kommissionierauftrages befüllt werden, zumal stets ein Risiko besteht, dass während der Abarbeitung des Kommissionierauftrages ein Fehler auftritt. Wenn jedoch sowohl der aktuelle Kommissionierauftrag als auch der folgende Kommissionierauftrag als Ladungsträgertyp jeweils einen Rollcontainer aufweisen, kann der Kommissionierplatz bereits befüllt werden, wenn der erste Kommissionierauftrag abgearbeitet wird. Unabhängig davon, ob bei Abarbeitung dieses Kommissionierauftrages ein Fehler auftritt oder der folgende Kommissionierauftrag plangemäß als nächstes bearbeitet wird, wird als nächster Ladungsträger ein Rollcontainer benötigt, weswegen dieser im Pufferplatz vorrätig gehalten werden kann.

Entsprechend ist bevorzugt auch vorgesehen, dass der Pufferplatz freigelassen wird, wenn ein auf einen aktuellen Kommissionierauftrag folgender Kommissionierauftrag nicht denselben Ladungsträgertyp aufweist wie ein aktueller Kommissionierauftrag.

Es kann dann leicht auf allfällige Fehler reagiert werden. Bei erfolgreichem Erledigen des ersten Kommissionierauftrages wird dann der Kommissionierplatz aus der Zuführung mit einem Ladungsträger eines entsprechenden Typs versorgt, gegebenenfalls über den Pufferplatz. Der Pufferplatz kann zwischen der Zuführung und dem Kommissionierplatz angeordnet sein. Es kann jedoch natürlich auch vorgesehen sein, dass ein oder mehrere Pufferplätze neben dem Kommissionierplatz angeordnet sind und über die Zuführung entsprechend befüllt werden, während ein Kommissionierauftrag erledigt wird.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 und 2 eine erfindungsgemäße Kommissioniervorrichtung in Seitenansicht und Draufsicht;
Fig. 3 eine weitere erfindungsgemäße Kommissioniervorrichtung in isometrischer Darstellung;
Fig. 4 und 5 einen Adapter sowie einen Adapter samt einem Rollcontainer;
Fig. 6 ein Detail einer erfindungsgemäßen Kommissioniervorrichtung;
Fig. 7 und 8 ein Detail einer erfindungsgemäßen Kommissioniervorrichtung in unterschiedlichen Arbeitszuständen;
Fig. 9 einen Hubschlitten einer erfindungsgemäßen Kommissioniervorrichtung;
Fig. 10 bis 16 weitere Details einer erfindungsgemäßen Kommissioniervorrichtung.

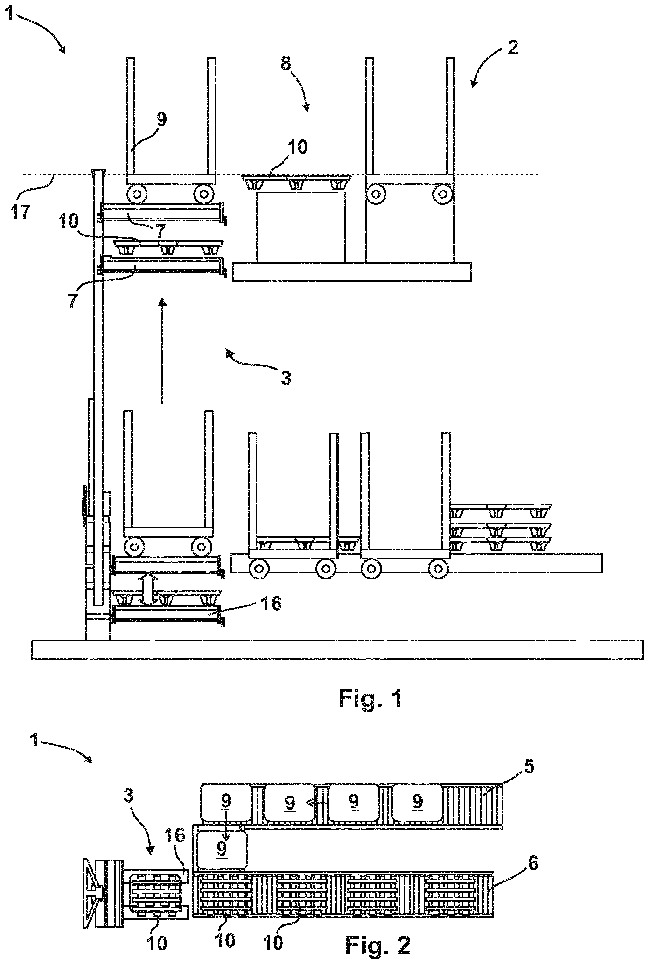

Fig. 1 und 2 zeigen eine erste erfindungsgemäße Kommissioniervorrichtung 1, und zwar in Fig. 1 in Seitenansicht und in Fig. 2 in Draufsicht auf eine untere Ebene der Kommissioniervorrichtung 1. Wie in der Draufsicht auf die untere Ebene erkennbar, sind eine erste Ladungsträgerbereitstellungseinrichtung 5 und eine zweite Ladungsträgerbereitstellungseinrichtung 6 vorgesehen, welche beide mit einer hier als vertikal verfahrbarer Lift ausgebildeten Zuführung 3 verbunden sind. Mit der ersten Ladungsträgerbereitstellungseinrichtung 5 werden Ladungsträger 4 eines ersten Typs, hier Rollcontainer 9, und mit der zweiten Ladungsträgerbereitstellungseinrichtung 6 Ladungsträger 4 eines zweiten Typs, hier Paletten 10 bereitgestellt.

Ladungsträger 4 der beiden Typen sind über den Lift einem Kommissionierplatz 2 sowie einem dem Kommissionierplatz 2 vorgelagerten Pufferplatz 8 zuführbar. Der Lift weist hierzu einen Hubschlitten 16 mit zwei Ebenen auf, wobei jede Ebene einen Ladungsträgerplatz 7 bildet, in welchem jeweils ein Ladungsträger 4 angeordnet werden kann. Ein oberer Ladungsträgerplatz 7 ist hier als Ladungsträgerplatz 7 für einen Rollcontainer 9 und ein unterer Ladungsträgerplatz 7 als Ladungsträgerplatz 7 für eine Palette 10 ausgebildet, weswegen der obere Ladungsträgerplatz 7 einen größeren vertikalen Platzbedarf aufweist als der untere Ladungsträgerplatz 7. Je nach Vertikalposition des Hubschlittens 16, also abhängig davon, ob sich der obere oder der untere Ladungsträgerplatz 7 auf Höhe einer oberhalb der Ladungsträgerbereitstellungseinrichtungen 5, 6 angeordneten Kommissionierebene 17 befindet, kann aus dem Hubschlitten 16 entweder der Ladungsträger 4 des ersten Typs oder der Ladungsträger 4 des zweiten Typs entnommen werden, sodass sich eine flexible Ladungsträgerzuführung ergibt. Der Pufferplatz 8 ist dem Kommissionierplatz 2, an welchem eine Kommissionierung beispielsweise durch einen Roboter erfolgt, unmittelbar vorgelagert, sodass der Pufferplatz 8 auch dann rasch mit einem Ladungsträger 4 versorgt werden kann, wenn die Zuführung 3 bzw. der Hubschlitten 16 gerade bewegt wird.

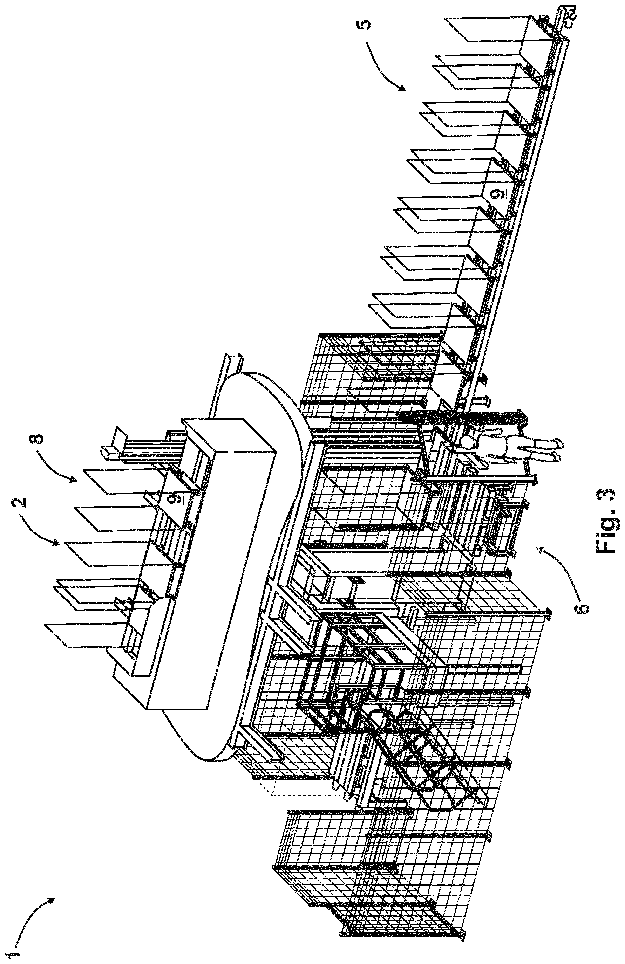

Fig. 3 zeigt eine weitere erfindungsgemäße Kommissioniervorrichtung 1 in isometrischer Darstellung. Auch hier erfolgt die Zuführung 3 der Ladungsträger 4 über die Ladungsträgerbereitstellungseinrichtungen auf einer anderen Ebene als die Kommissionierung und ist auch hier die Zuführung 3 als Lift mit einem vertikal verfahrbaren Hubschlitten 16 ausgebildet. Im Unterschied zu der in Fig. 1 und 2 dargestellten Kommissioniervorrichtung 1 ist hier die erste Ladungsträgerbereitstellungseinrichtung 5 mit einem Rollenförderer ausgebildet, während die zweite Ladungsträgerbereitstellungseinrichtung 6, über welche Paletten 10 zugeführt werden können, durch einen Palettenpufferplatz gebildet ist, welchem Paletten 10 aus einem Lager zugeführt werden, beispielsweise mit einem Hubstapler.

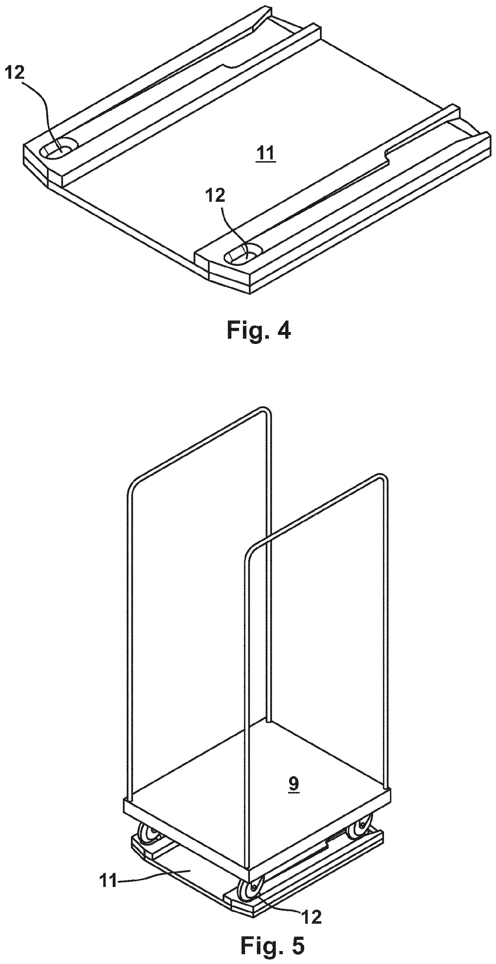

Fig. 4 zeigt einen als Adapterplatte 11 ausgebildeten Adapter zum Transportieren von Rollbehältern in einer erfindungsgemäßen Kommissioniervorrichtung 1. Der Adapter ist im Wesentlichen plattenförmig ausgebildet, sodass dieser leicht mit einer Fördereinrichtung wie beispielweise einen Rollenförderer transportiert werden kann, weist jedoch an einer Oberseite Ausnehmungen 12 für Rollen des Rollcontainers 9 auf, in welchen der Rollcontainer 9 leicht einrasten und somit mit dem Adapter stabil transportiert werden kann.

Fig. 5 zeigt den Adapter samt dem auf diesem angeordneten Rollcontainer 9 in einer Anordnung, in welcher der Adapter samt dem Rollcontainer 9 durch die Kommissioniervorrichtung 1 bewegt wird.

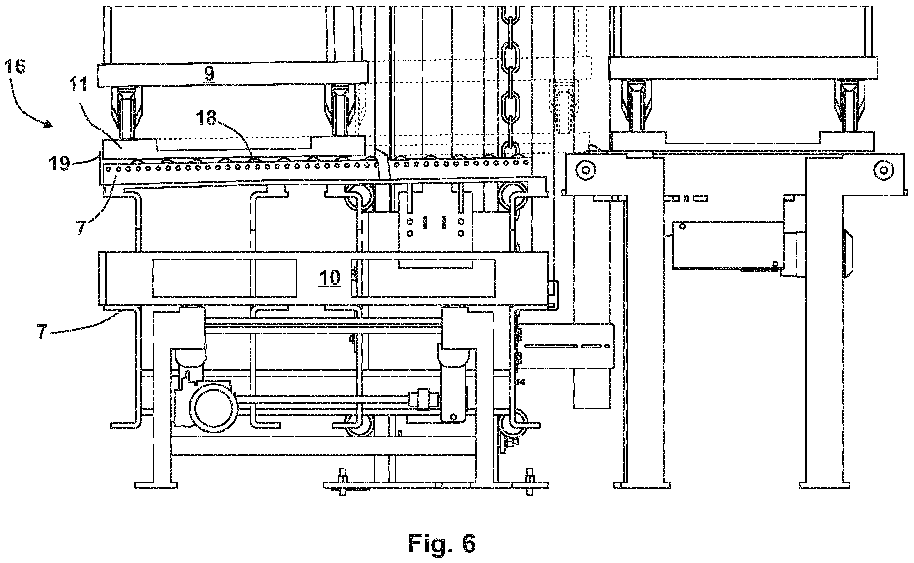

Fig. 6 zeigt einen Hubschlitten 16 eines Lifts der Kommissioniervorrichtung 1 der Fig. 3 im Detail. Wie ersichtlich, sind hier zwei Ladungsträgerplätze 7 vorgesehen, wobei analog zu der in Fig. 1 und 2 dargestellten Kommissioniervorrichtung 1 ein unterer Ladungsträgerplatz 7 für eine Palette 10 und ein oberer Ladungsträgerplatz 7 für einen Rollcontainer 9 vorgesehen sind. Der obere Ladungsträgerplatz 7 ist mit Rollbahnen 18 ausgebildet, welche eine geringe Neigung und einen Anschlag 19 aufweisen, sodass ein auf einem Adapter befindlicher Rollcontainer 9 leicht in den oberen Ladungsträgerplatz 7 eingelagert werden kann und an einer definierten Position verbleibt. An einem unteren Ende dieser Rollbahn 18 ist hierbei ein Anschlag 19 angeordnet, an welcher die Adapterplatte 11 samt darauf befindlichem Rollcontainer 9 anliegt, sodass eine Position des Rollcontainers 9 während eines Transports mit dem Hubschlitten 16 eindeutig definiert ist.

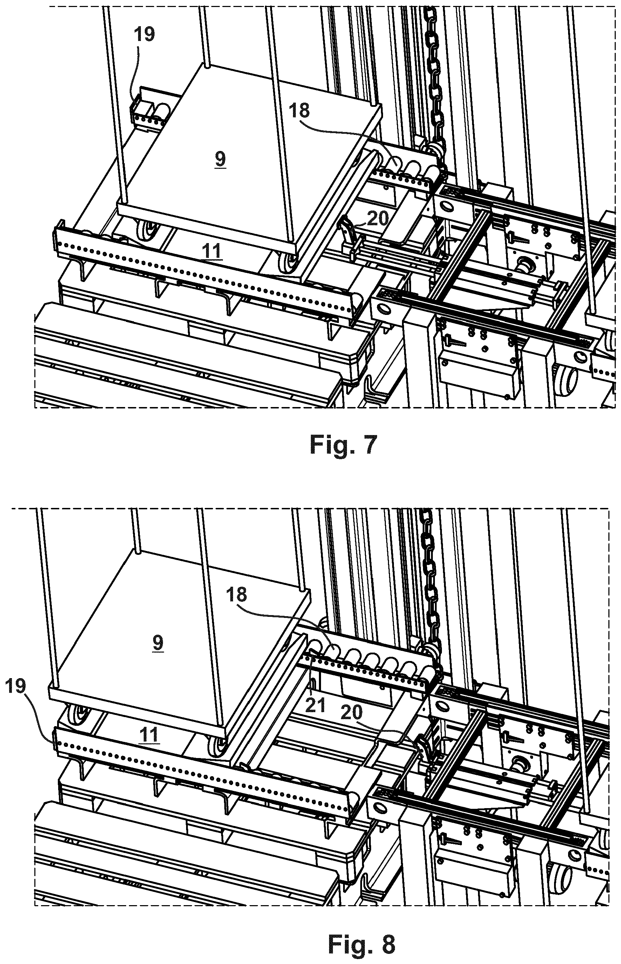

Fig. 7 und 8 zeigen unterschiedliche Verfahrenszustände eines Einlagervorganges eines solchen auf einem Adapter befindlichen Rollcontainers 9 in unterschiedlichen Zuständen. Fig. 7 zeigt einen Zustand, wobei der Adapter mittels eines Pushers 20 auf die Rollbahnen 18 geschoben wird. Die Rollbahnen 18 weisen hier eine Neigung von beispielsweise 1 Grad oder 2 Grad auf. Weiter ist üblicherweise eine Rücklaufsperre 21 vorgesehen, durch welche vermieden ist, dass ein in den Ladungsträgerplatz 7 geschobener Adapter wieder herausrollt.

Ferner ist endseitig ein Anschlag 19 vorgesehen, an welchem der Adapter samt dem Rollcontainer 9 schließlich anliegt, wie dies in der Fig. 8 ersichtlich ist. In dieser Position ist der Pusher 20 auch wieder zurückgefahren, sodass der Hubschlitten 16 ausgehend von dieser Position vertikal bewegt werden kann.

Ein unterer Ladungsträgerplatz 7 wird hier mit Paletten 10 befüllt. Diese Befüllung kann automatisiert oder manuell erfolgen.

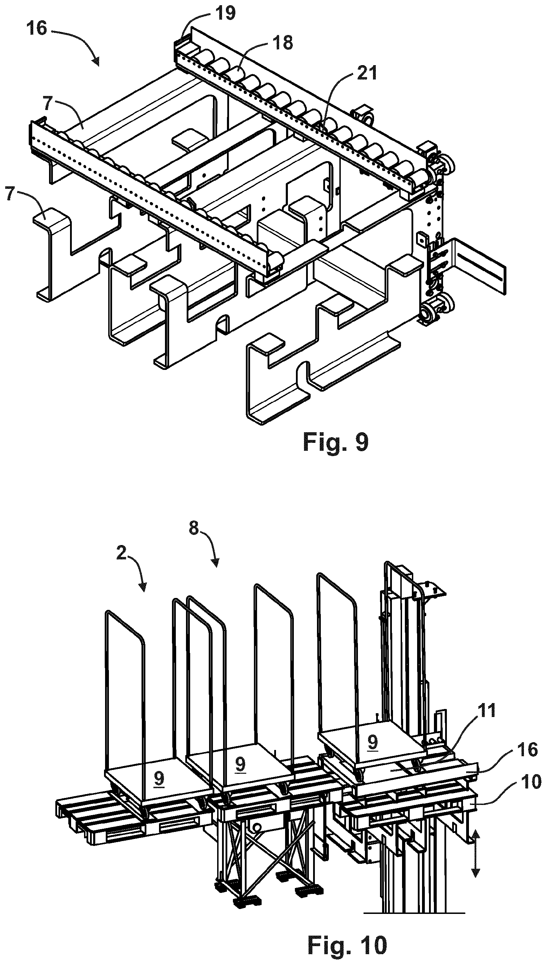

Fig. 9 zeigt den Hubschlitten 16 im Detail. Wie ersichtlich sind hier im oberen Bereich Rollenbahnen mit Anschlägen und Rücklaufsperren 21 vorgesehen und im unteren Bereich eine Aufnahme für eine Palette 10 ausgebildet.

Fig. 10 zeigt den Pufferplatz 8 sowie den Kommissionierplatz 2 und angrenzend den Hubschlitten 16 der als Lift ausgebildeten Zuführung 3 samt einem Rollcontainer 9 und einer Palette 10. Eine Bewegung der Palette 10 oder des Rollcontainers 9 auf dem Adapter vom Lift über den Pufferplatz 8 zum Kommissionierplatz 2 erfolgt hier beispielweise mit Teleskopschienen 22, die somit sowohl in die Paletten 10 als auch in die Adapter eingreifen können, wenn sich der Hubschlitten 16 auf entsprechender Höhe befindet. Die Teleskopschienen 22 können beispielsweise gummiert und/oder mit einem Autoreifenprofil ausgebildet sein, um eine entsprechende Reibung herstellen und die einzelnen Ladungsträger 4 vom Hubschlitten 16 zum Pufferplatz 8 und Kommissionierplatz 2 transportieren zu können.

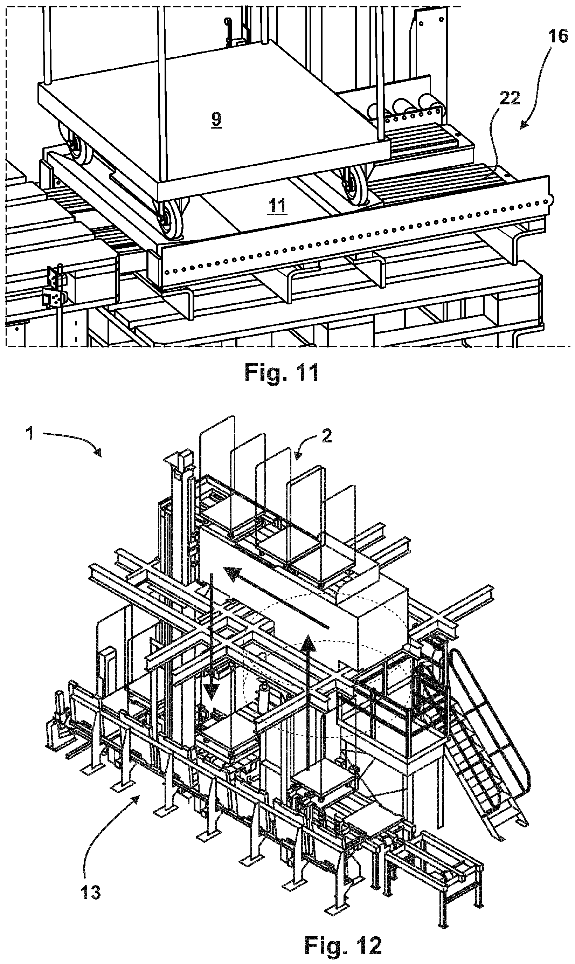

Fig. 11 zeigt im Detail, wie entsprechende Teleskopschienen 22 gerade an einen am oberen Ladungsträgerplatz 7 angeordneten Adapter angreifen, um diesen aus dem Hubschlitten 16 zu entnehmen.

Fig. 12 zeigt eine an den Kommissionierplatz 2 anschließende Trenneinrichtung 13, mit welcher der Adapter vom Rollcontainer 9 getrennt wird, nachdem der Kommissionierauftrag erledigt ist. Wie ersichtlich ist diese Trenneinrichtung 13 unterhalb des Kommissionierplatzes 2 angeordnet. Ladungsträger 4 werden somit mittels der durch den Lift mit dem Hubschlitten 16 gebildeten Zuführung 3 von einer unteren Ebene auf die Kommissionierebene 17 gehoben, wonach die Ladungsträger 4 zum Kommissionierplatz 2 bewegt werden, an welchem Waren gemäß einem Kommissionierauftrag auf die Ladungsträger 4 bewegt werden, wonach die Ladungsträger 4 samt den Waren abgesenkt und dabei zur Trenneinrichtung 13 bewegt werden. Diese Auf- und anschließende Abbewegung der Ladungsträger 4 ist in Fig. 12 durch entsprechende Pfeile dargestellt.

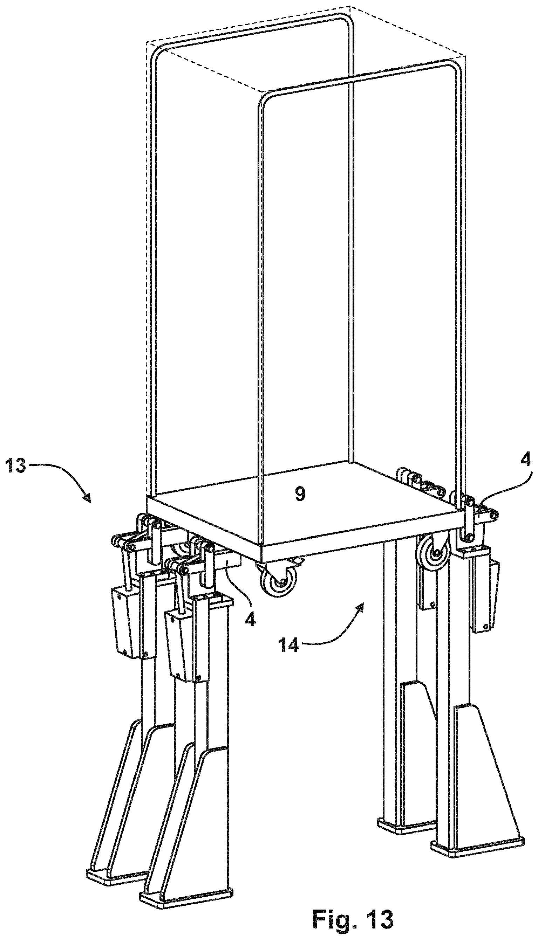

Die Trenneinrichtung 13 weist eine in Fig. 13 im Detail dargestellte Halteeinrichtung 14 auf, welche bewegbare Finger 4 aufweist, durch welche der Rollcontainer 9 unabhängig vom Adapter gehalten werden kann. Bei einer Abwärtsbewegung des Adapters halten somit die Finger 4 den Rollcontainer 9 in Position, während die Adapterplatte 11 weiter nach unten bewegt wird.

Weiter weist die Trenneinrichtung 13 eine Abfördereinrichtung 23 auf, mit welcher der Adapter unabhängig vom Rollcontainer 9 förderbar ist.

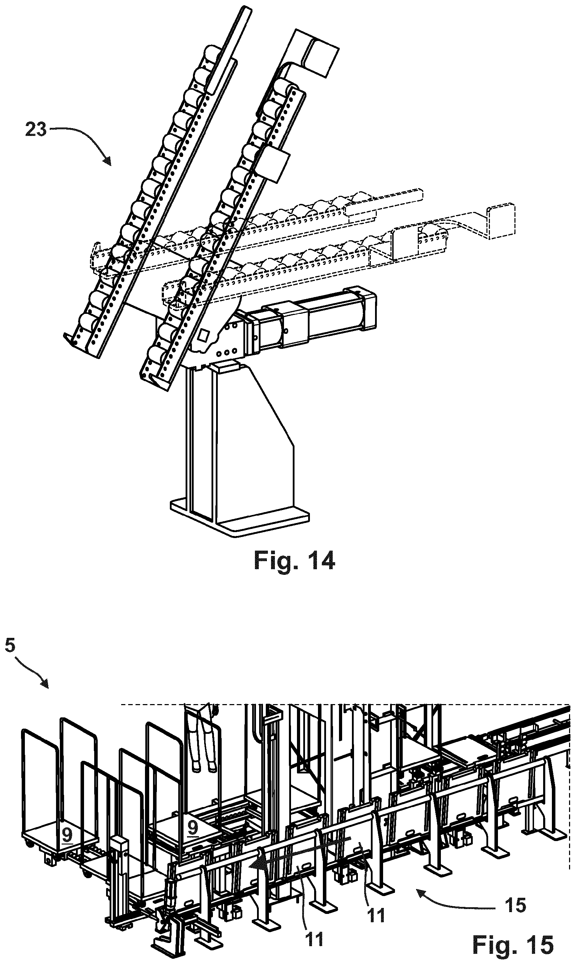

Fig. 14 zeigt im Detail einen Aspekt dieser Abfördereinrichtung 23, mit welcher der Adapter mittels einer Schwenkbewegung aus einem vertikalen Verfahrbereich des Rollcontainers 9 entfernt und zu einer Rückfördereinrichtung 15 bewegt wird, sodass der Rollcontainer 9, welcher zur Trennung von der Adapterplatte 11 mit der Halteeinrichtung 14 gehalten wird, in weiterer Folge von der Halteeinrichtung 14 gelöst und durch eine weitere Vertikalbewegung nach unten aus der Kommissioniervorrichtung 1 entnommen und zu einem finalen Zielort transportiert werden kann.

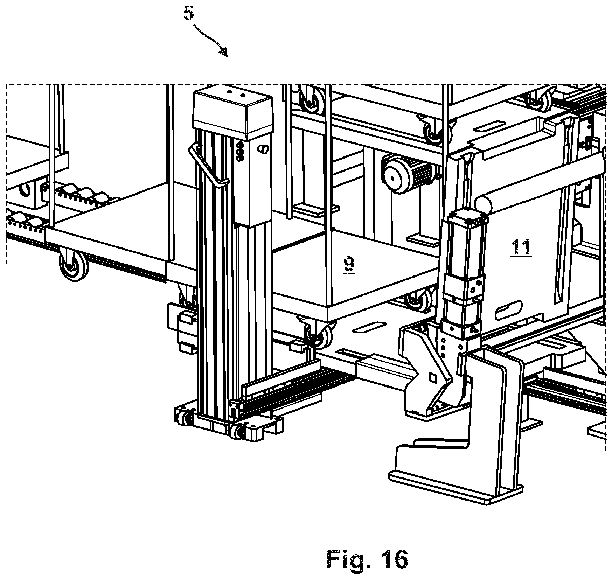

Mittels einer an die Schwenkeinheit anschließenden Rückfördereinrichtung 15, welche in Fig. 15 und 16 ersichtlich ist, werden die Adapter zurück zur ersten Ladungsträgerbereitstellungseinrichtung 5 gefördert, an welcher die Adapterplatten 11 schließlich wieder mit Rollcontainern 9 beladen werden. Dieser finale Schritt der Beladung der Adapter mit Rollcontainern 9 in der ersten Ladungsträgerbereitstellungseinrichtung 5 ist in Fig. 15 und 16 dargestellt.

Mit einer erfindungsgemäßen Kommissioniervorrichtung 1 sowie einem entsprechend damit umsetzbaren Kommissionierverfahren ist ein rasches und effizientes Kommissionieren von Waren, auch bei Kommissionieraufträgen mit Ladungsträgern 4 unterschiedlichen Typs, zuverlässig möglich.

## Patentansprüche

1. Kommissioniervorrichtung (1), aufweisend einen Kommissionierplatz (2) sowie eine dem Kommissionierplatz (2) vorgelagerte Zuführung (3), um dem Kommissionierplatz (2) einen Ladungsträger zuzuführen, auf welchem Ladungsträger anschließend Waren kommissioniert werden können, wobei mit der Zuführung (3) eine erste Ladungsträgerbereitstellungseinrichtung (5) verbunden ist, von welcher Ladungsträger eines ersten Typs der Zuführung (3) zuführbar sind, **dadurch gekennzeichnet, dass** mit der Zuführung (3) auch eine zweite Ladungsträgerbereitstellungseinrichtung (6) verbunden ist, um dem Kommissionierplatz (2) über die Zuführung (3) alternativ zum Ladungsträger des ersten Typs auch Ladungsträger eines zweiten Typs zuführen zu können.

2. Kommissioniervorrichtung (1) nach Anspruch 1, **dadurch gekennzeichnet, dass** die Zuführung (3) zwei Ladungsträgerplätze (7) aufweist, wobei dem Kommissionierplatz (2) von jedem Ladungsträgerplatz (7) aus Ladungsträger zuführbar sind.

3. Kommissioniervorrichtung (1) nach Anspruch 1 oder 2, **dadurch gekennzeichnet, dass** die Ladungsträgerplätze (7) vertikal übereinander angeordnet sind.

4. Kommissioniervorrichtung (1) nach einem der Ansprüche 1 bis 3, **dadurch gekennzeichnet, dass** zumindest ein Ladungsträgerplatz (7) mit Rollen ausgebildet ist, um ein einfaches Ein- und Auslagern von Ladungsträgern zu ermöglichen.

5. Kommissioniervorrichtung (1) nach Anspruch 1 oder 4, **dadurch gekennzeichnet, dass** zwischen der Zuführung (3) und dem Kommissionierplatz (2) ein Pufferplatz (8) für zumindest einen, insbesondere für genau einen, Ladungsträger vorgesehen ist.

6. Kommissioniervorrichtung (1) nach Anspruch 1 oder 5, **dadurch gekennzeichnet, dass** die Zuführung (3) als vertikal verfahrbarer Lift ausgebildet ist.

7. Kommissioniervorrichtung (1) nach einem der Ansprüche 1 bis 6, **dadurch gekennzeichnet, dass** die erste Ladungsträgerbereitstellungseinrichtung (5) und/oder die zweite Ladungsträgerbereitstellungseinrichtung (6) als Rollenförderer oder Kettenförderer ausgebildet sind.

8. Kommissioniervorrichtung (1) nach einem der Ansprüche 1 bis 7, **dadurch gekennzeichnet, dass** die erste Ladungsträgerbereitstellungseinrichtung (5) zur Bereitstellung von Rollcontainern (9) eingerichtet ist.

9. Kommissioniervorrichtung (1) nach Anspruch 8, **dadurch gekennzeichnet, dass** die Rollcontainer (9) von der ersten Ladungsträgerbereitstellungseinrichtung (5) auf Adaptern bereitgestellt werden, welche Adapter Formschlusselemente, insbesondere Ausnehmungen (12), zur formschlüssigen Fixierung der Rollcontainer (9) an den Adaptern aufweisen.

10. Kommissioniervorrichtung (1) nach Anspruch 8 oder 9, **dadurch gekennzeichnet, dass** eine Trenneinrichtung (13) vorgesehen ist, mittels welcher die Adapter von den Rollcontainern (9) trennbar sind.

11. Kommissioniervorrichtung (1) nach Anspruch 10, **dadurch gekennzeichnet, dass** die Trenneinrichtung (13) eine Halteeinrichtung (14), mittels welcher der Rollcontainer (9) unabhängig vom Adapter fixierbar ist, und eine Abfördereinrichtung (23), mittels welcher der Adapter unabhängig vom Rollcontainer (9) abförderbar ist, aufweist.

12. Kommissioniervorrichtung (1) nach Anspruch 11, **dadurch gekennzeichnet, dass** an die Abfördereinrichtung (23) anschließend eine Rückfördereinrichtung (15) vorgesehen ist, mit welcher Rückfördereinrichtung (15) Adapter wieder an die erste Ladungsträgerbereitstellungseinrichtung (5) rückgefördert werden können.

13. Verfahren zum Kommissionieren von Waren auf einem Ladungsträger an einem Kommissionierplatz (2), **dadurch gekennzeichnet, dass** dem Kommissionierplatz (2) über eine Zuführung (3) wahlweise Ladungsträger eines ersten Typs oder Ladungsträger eines zweiten Typs zugeführt werden, auf welchen die Waren anschließend kommissioniert werden, insbesondere mit einer Kommissioniervorrichtung (1) nach einem der Ansprüche 1 bis 12.

14. Verfahren nach Anspruch 13, **dadurch gekennzeichnet, dass** zwischen der Zuführung (3) und dem Kommissionierplatz (2) ein Pufferplatz (8) für einen Ladungsträger vorgesehen ist.

15. Verfahren nach Anspruch 13 oder 14, **dadurch gekennzeichnet, dass** der Pufferplatz (8) mit dem Ladungsträger eines auf einen aktuellen Kommissionierauftrag folgenden Kommissionierauftrages befüllt wird, wenn dieser folgende Kommissionierauftrag denselben Ladungsträgertyp aufweist wie der aktuelle Kommissionierauftrag.

16. Verfahren nach einem der Ansprüche 13 bis 15, **dadurch gekennzeichnet, dass** der Pufferplatz (8) freigelassen wird, wenn ein auf einen aktuellen Kommissionierauftrag folgender Kommissionierauftrag nicht denselben Ladungsträgertyp aufweist wie ein aktueller Kommissionierauftrag.
